# EUROPÄISCHE PATENTSCHRIFT

(11) **EP 2 477 839 B1**
(45) Veröffentlichungstag und Bekanntmachung des Hinweises auf die Patenterteilung: **08.06.2016**
(21) Anmeldenummer: 10735025.8
(22) Anmeldetag: 29.07.2010
(51) Int. Cl.: B60L 3/00, B60L 11/12, B60K 6/48, B60L 3/04, B60L 11/14, B60L 11/18

(54) **VERFAHREN UND VORRICHTUNG ZUM BETREIBEN EINES HYBRIDFAHRZEUGES BEIM DEFEKT EINES ENERGIESYSTEMS**
METHOD AND APPARATUS FOR OPERATING AN HYBRID VEHICLE IN CASE OF DEFECT IN THE ENERGY SYSTEM
PROCÉDÉ ET DISPOSITIF POUR FAIRE FONCTIONNER UN VÉHICULE HYBRIDE EN CAS DE DÉFAILLANCE D'UN SYSTÈME D'ALIMENTATION EN ÉNERGIE

(30) Priorität: 14.09.2009 DE 102009029417
(43) Veröffentlichungstag der Anmeldung: 25.07.2012
(73) Patentinhaber: Robert Bosch GmbH, 70442 Stuttgart (DE)
(72) Erfinder: SCHNEIDER, Norbert, 71272 Renningen-Malmsheim (DE); LEHNER, Michael, 75446 Wiernsheim (DE)
(86) Internationale Anmeldenummer: PCT/EP2010/061056
(87) Internationale Veröffentlichungsnummer: WO 2011/029668

(56) Entgegenhaltungen:
- WO-A1-2008/010062
- DE-A1- 10 213 105
- DE-A1-102008 008 561
- US-A1- 2002 157 882
- US-B1- 6 978 854

## Beschreibung

### Stand der Technik

Die Erfindung betrifft ein Verfahren zum Betreiben eines Hybridfahrzeuges beim Defekt eines Energiesystems, wobei das Hybridfahrzeug von mindestens zwei Antriebsaggregaten gemeinsam oder getrennt angetrieben wird und mindestens ein elektrisches Antriebsaggregat ein Hochvoltenergiesystem elektrisch auflädt, welches ein Niedervoltenergiesystem mit elektrischer Energie versorgt, wobei eine Hochvoltspannung in eine Niedervoltspannung zur Versorgung von mindestens einer Steuereinheit des Hybridfahrzeuges umgesetzt wird sowie eine Vorrichtung zur Durchführung des Verfahrens.

Fahrzeuge mit einer hybriden Antriebsstruktur weisen einen Verbrennungsmotor und als zweites Antriebsaggregat meistens mindestens eine elektrische Maschine auf. So kann das Antriebsmoment während des Fahrbetriebes des Hybridfahrzeuges von beiden Antriebsaggregaten aufgebracht werden. Der elektrische Antrieb ist dabei mit einem Energiespeicher verbunden, der den elektrischen Antrieb mit elektrischer Energie versorgt. Befindet sich der Verbrennungsmotor im Schleppbetrieb, arbeitet der elektrische Antrieb generatorisch, wodurch dem Energiespeicher durch denselben Energie zugeführt wird. Dadurch wird der Energiespeicher wieder mit Energie geladen.

Zum Betrieb des elektrischen Antriebes ist eine Hochvoltspannung notwendig, die von einer Hochvoltbatterie bereitgestellt wird, die als Energiespeicher ausgebildet ist. Vom Hochvoltenergiesystem aus wird ein Niedervoltenergiesystem über einen DC/DC-Wandler mit Energie versorgt.

In den neusten Entwicklungen wird bei der Herstellung des Hybridfahrzeuges auf einen Starter verzichtet und der Verbrennungsmotor mit Hilfe der elektrischen Maschine gestartet.

Das Hochvoltenergiesystem des Hybridfahrzeuges wird jederzeit nicht nur auf den Ladezustand der Hochvoltbatterie, sondern auch dahingehend überwacht, ob eine mechanische Abdeckung des Hochvoltenergiesystems bewegt bzw. geöffnet wird. Ist dies der Fall, wird das Hochvoltenergiesystem sofort aus Sicherheitserwägungen abgeschaltet, um einen möglichen Funkenüberschlag zu verhindern oder einen Bediener bei der Manipulation an dem Energiesystem zu schützen. Dies hat aber zur Folge, dass die elektrische Maschine nicht mehr mit Hochspannung versorgt wird und die Hochvoltbatterie nicht mehr nachgeladen werden kann. Mit der Zeit leert sich somit die Batterie des Niedervoltenergiesystems, welches die Steuergeräte des Hybridfahrzeuges mit Energie versorgt. Bleibt die Energieversorgung der Steuergeräte aus, kann das Hybridfahrzeug nach einiger Zeit nicht mehr weiter fahren.

Aus der DE 102 13 105 A1 ist ein Antrieb für ein Kraftfahrzeug mit einem Verbrennungsmotor bekannt, wobei Schaltelemente und eine Steuerung vorgesehen sind, die Komponenten des Kraftfahrzeugs in Abhängigkeit vom Fahrzeugverhalten oder dem Ladezustands eines Energiespeichers zwischen verschiedenen Schaltzuständen der Komponenten umschalten. Aus der US 6 978 854 B1 ist ein Antriebsstrang und ein Verfahren zum Betrieb eines Hybridfahrzeuges bekannt, wobei der mechanische Teil des Antriebsstrangs weiter betrieben wird, wenn der elektromechanische Teil des Antriebsstrangs nicht verfügbar ist.

### Offenbarung der Erfindung

Das erfindungsgemäße Verfahren zum Betreiben eines Hybridfahrzeuges beim Defekt eines Energiesystems mit den Merkmalen des Anspruchs 1 weist dabei den Vorteil auf, dass die Energieversorgung der Steuergeräte über das Niedervoltenergiesystem durch das elektrische Antriebsaggregat aufrecht erhalten wird. Dadurch, dass nach dem Abtrennen des Hochvoltenergiesystems das elektrische Antriebsaggregat in einen Zustand zur Erzeugung einer für den Nutzer sicherheitsunkritischen Spannung versetzt wird, wobei die sicherheitsunkritische Spannung zur Versorgung der mindestens einen Steuereinheit in die Niedervoltspannung umgesetzt wird, ist ein Notfahrbetrieb des Hybridfahrzeuges auch bei einem Defekt des Hochvoltenergiesystems jederzeit möglich. Die elektrische im Generatorbetrieb arbeitende elektrische Maschine wird für die Bereitstellung der Energie für das Niedervoltenergiesystem genutzt, wodurch auch beim Defekt des Hochvoltenergiesystem ausreichend Energie erzeugt wird, um alle Steuergeräte, die für den Fahrbetrieb des Hybridfahrzeuges notwendig sind, auch in diesem Zustand funktionsbereit zu halten.

Vorteilhafterweise werden zur Feststellung eines Defektes im Hochvoltenergiesystem die hochspannungsführenden Komponenten, insbesondere die mechanische Abdeckung dieser überwacht. Durch die laufende Überwachung der mechanischen Abdeckung, welche auch als "Deckel offen Erkennung" bezeichnet wird, ist eine schnelle und zuverlässige Erkennung eines Fehlers in dem Hochvoltenergiesystem möglich. Schon die kleinste Abweichung führt zur Abschaltung des Hochvoltenergiesystems um Fahrer und Fahrzeug nicht zu gefährden. Trotzdem wird durch das erfindungsgemäße Verfahren immer ausreichend Energie bereitgestellt, um sicher ein Liegenbleiben des Hybridfahrzeuges zu verhindern.

In einer Weiterbildung werden zur Feststellung eines Defektes im Hochvoltenergiesystem die Kommunikationsverbindungen zum Hochvoltenergiesystem, insbesondere eine Busverbindung, überwacht. Damit wird eine Unterbrechung der Kommunikationsverbindungen zum bzw. im Hochvoltenergiesystem zuverlässig erkannt und bei einer darauf folgenden Abschaltung des Hochvoltenergiesystems die elektrische Maschine als Energieversorger des Niedervoltenergiesystems zuverlässig gestartet.

In einer Ausgestaltung beträgt die für den Bediener sicherheitsunkritische Spannung annähernd 60 V. Damit wird sichergestellt, dass eine Verletzungsgefahr des Fahrers, welcher möglicherweise an dem System der elektrischen Maschine bzw. deren Umgebung tätig wird, unterbunden wird.

Vorteilhafterweise ist das elektrische Antriebsaggregat als Elektromotor ausgebildet, der von einem drehmomentgeregelten Modus in einen spannungsgeregelten Modus umgeschaltet wird. Durch diese Spannungsregelung wird sichergestellt, dass der sicherheitsunkritische Spannungswert von annähernd 60 V kontinuierlich aufrechterhalten wird, um die Versorgung des Niedervoltenergiesystems zu gewährleisten.

In einer Ausgestaltung werden die Steuereinheiten, welche für den Komfortbetrieb des Hybridfahrzeuges verantwortlich sind, bei der Feststellung des Defektes in dem Hochvoltenergiesystem abgeschaltet. Damit wird sichergestellt, dass alle die Steuereinheiten zuverlässig mit Energie versorgt sind, welche für den Fahrbetrieb des Hybridfahrzeuges notwendig sind. Steuergeräte für den Komfortbetrieb, wie beispielsweise für Fensterheber, Klimaanlage oder Heckscheibenheizung belasten das Niedervoltenergiesystem solange nicht mehr, bis das Hochvoltenergiesystem, von welchem eine Spannung von 300 V zur Verfügung gestellt wird und in die Niedervoltspannung von 14 V umgewandelt wird, wieder betriebsbereit ist.

Eine andere Weiterbildung der Erfindung betrifft eine Vorrichtung zum Betreiben eines Hybridfahrzeuges beim Defekt eines Energiesystems, wobei das Hybridfahrzeug von mindestens zwei Antriebsaggregaten gemeinsam oder getrennt angetrieben wird und mindestens ein elektrisches Antriebsaggregat das Hochvoltenergiesystem elektrisch auflädt, welches ein Niedervoltenergiesystem mit elektrischer Energie versorgt, wobei eine Hochvoltspannung in eine Niedervoltspannung zur Versorgung von mindestens einer Steuereinheit des Hybridfahrzeuges umgesetzt wird und bei Feststellung eines Defektes im Hochvoltenergiesystem dieses von dem elektrischen Antriebsaggregat abgetrennt wird. Um die Energieversorgung der Steuergeräte über das Niedervoltenergiesystem auch bei einem Defekt des Hochvoltenergiesystems aufrecht zu erhalten, sind Mittel vorhanden, welche nach dem Abtrennen des Hochvoltenergiesystems das elektrische Antriebsaggregat in einen Zustand zur Erzeugung einer für den Nutzer sicherheitsunkritischen Spannung versetzen, wobei die sicherheitsunkritische Spannung zur Versorgung der mindestens einen Steuereinheit in die Niedervoltspannung umgesetzt wird. Dadurch, dass die elektrischen Maschine eine sicherheitsunkritische Spannung erzeugt, aus welcher dem Niedervoltenergiesystem ausreichend Energie zugeführt werden kann, ist ein Notfahrbetrieb des Hybridfahrzeuges jederzeit möglich, da die für den Fahrbetrieb notwendigen Steuereinheiten ausreichend mit Energie versorgt werden.

Vorteilhafterweise ist das elektrische Antriebsaggregat über einen Pulswechselrichter mit einer Schalteinrichtung verbunden, welche das Hochvoltenergiesystem mit dem elektrischen Antriebsaggregat im intakten Betriebszustand des Hochvoltenergiesystems verbindet und bei einem Defekt des Hochvoltenergiesystems die Verbindung unterbricht. Durch eine einfache Schalteinrichtung, die von einer Steuereinheit zum Hochvoltbatteriemanagement beim Detektieren eines Fehlers im Hochvoltenergiesystem angesteuert wird, ist eine Abkopplung des defekten Hochvoltenergiesystems vom Energieversorgungsnetz des Hybridfahrzeuges einfach ohne großen konstruktiven und Kostenaufwand möglich.

In einer Ausgestaltung ist ein Gleichspannungswandler einerseits an die Schalteinrichtung und den Pulswechselrichter geführt und andererseits mit dem Niedervoltenergiesystem verbunden. Bei dem Gleichspannungswandler handelt es sich um einen DC-/DC-Wandler, also einen Wandler, welcher eine Gleichspannung von einem ersten Betrag in eine Gleichspannung eines zweiten Betrages umwandelt.

In einer Weiterbildung ist der Gleichspannungswandler zwischen einem ersten Betriebsmodus zur Umwandlung einer Hochvoltspannung in eine Niedervoltspannung und einem zweiten Betriebsmodus zur Umwandlung der sicherheitsunkritischen Spannung in die Niedervoltspannung umschaltbar. Somit reicht eine geringe Modifikation des Gleichspannungswandlers aus, um den Betrieb in beiden Modi zu gewährleisten. Auf zusätzlich Bauelemente kann daher verzichtet werden.

Vorteilhafterweise ist der Pulswechselrichter so ausgebildet, dass dieser die an ihm anliegenden Spannungen in beide Richtungen wandeln kann. Der Pulswechselrichter wandelt somit die von dem elektrischen Antriebsaggregat bereitgestellte Wechselspannung in eine Gleichspannung zur Einspeisung in das Hochvoltenergiesystem bzw. anders herum. Auch der Pulswechselrichter ist ein Bauteil, welches an sich im elektrischen System des Hybridfahrzeuges bereits vorhanden ist und welches auch für den dauerhaften Notfahrbetrieb des Hybridfahrzeuges genutzt wird, ohne dass zusätzliche Bauteile bereitgestellt werden müssen.

In einer Ausgestaltung ist das elektrische Antriebsaggregat als Elektromotor ausgebildet, welcher von einer Elektromotorsteuereinheit bei der Meldung eines Defektes durch eine Batteriemanagementsteuereinheit, welche das Hochvoltenergiesystem, insbesondere eine Hochvoltbatterie überwacht, von einem drehmomentgeregelten Betriebsmodus in einen spannungsgeregelten Betriebsmodus zur Bereitstellung der sicherheitsunkritischen Spannung umgeschaltet wird. Der Elektromotor arbeitet somit als Energiequelle für das Niedervoltbordnetz, so dass eine dauerhafte Fortbewegung des Hybridfahrzeuges möglich ist.

In einer Weiterbildung umfasst das Niedervoltenergiesystem eine Niedervoltbatterie, welche über den Gleichspannungswandler mit Niedervoltspannung versorgt wird und welche die Steuereinheiten über ein Niedervoltbordnetz mit Niedervoltspannung versorgt. Die Niedervoltbatterie wird dabei konstant auf 14 V Gleichspannung geladen, die für die Versorgung der Steuereinheiten des Hybridfahrzeuges erforderlich sind.

Die Erfindung lässt zahlreiche Ausführungsformen zu. Eine davon soll anhand der in der Zeichnung dargestellten Figuren näher erläutert werden.

Es zeigt:
- Figur 1:: schematische Darstellung eines Parallelhybridantriebes
- Figur 2:: Einbindung des Hybridantriebs in das Energiesystem nach dem Stand der Technik
- Figur 3:: ein Ausführungsbeispiel für die erfindungsgemäße Gestaltung des Energiesystems nach Figur 2
- Figur 4:: schematischer Ablaufplan zur Durchführung des erfindungsgemäßen Verfahrens

Gleiche Merkmale sind mit gleichen Bezugszeichen gekennzeichnet.

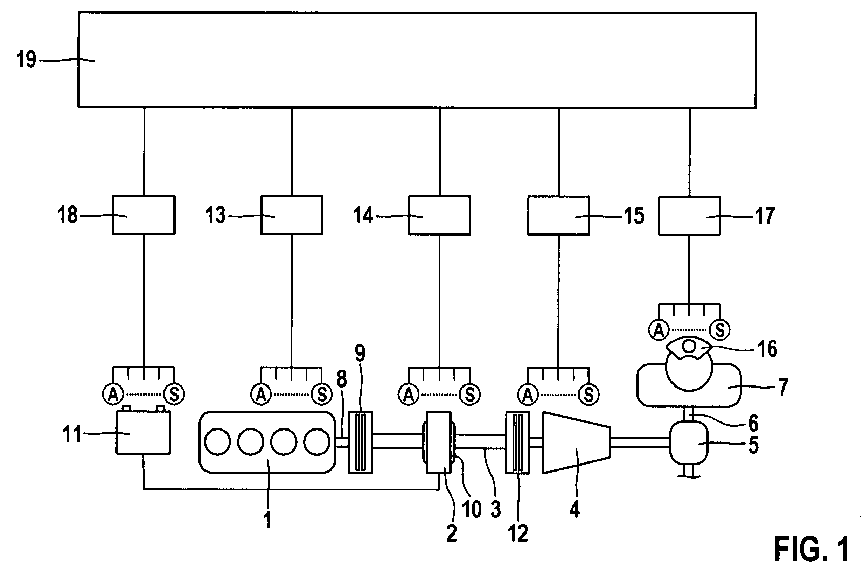

Figur 1 zeigt eine Prinzipdarstellung für ein Fahrzeug mit einem Parallelhybridantrieb. Der Hybridantrieb wird von einem Verbrennungsmotor 1 als erste Antriebseinheit und einem Elektromotor 2 als zweite Antriebseinheit gebildet.

Der Verbrennungsmotor 1 ist über den Antriebsstrang 3 mit dem Getriebe 4 verbunden, welches wiederum über das Differential 5 auf die Radachse 6 zum Antrieb des Rades 7 führt.

Der Elektromotor 2 ist auf der Welle 8 des Verbrennungsmotors 1 angeordnet und führt somit ebenfalls auf den Antriebsstrang 3, der mit dem Getriebe 4 verbunden ist. Zwischen dem Getriebe 4 und dem Antriebsstrang 3 ist eine Anfahrkupplung 12 angeordnet, welche zur Aufnahme der Fahrzeugbewegung des Fahrzeuges den Antriebsstrang 3 mit dem Getriebe verbindet. Der Elektromotor 2 trägt damit zum Antrieb der Räder 7 und zum Gesamtdrehmoment des Fahrzeuges bei. Der Elektromotor 2 und der Verbrennungsmotor 1 sind über eine Trennkupplung 9 miteinander verbunden. Diese Trennkupplung 9 erlaubt im geöffneten Zustand den Antrieb des Fahrzeuges allein über den Elektromotor 2, während im geschlossenen Zustand der Trennkupplung 9 sowohl der Verbrennungsmotor 1 als auch der Elektromotor 2 zum Antrieb des Fahrzeuges beitragen.

Darüber hinaus steht der Elektromotor 2 über eine Leistungselektronik 10 in Verbindung mit einer Hochvoltbatterie 11, die den Elektromotor 2 in dessen motorischem Betrieb mit elektrischer Energie versorgt. Alternativ wird die Hochvoltbatterie 11 im generatorischen Betrieb des Elektromotors 2 von diesem mit Energie versorgt. Das heißt, die Hochvoltbatterie 11 wird über den Elektromotor 2 aufgeladen.

Jedes Aggregat des Hybridantriebes wird dabei über ein Steuergerät gesteuert bzw. geregelt. So wird der Verbrennungsmotor 1 von einem Motorsteuergerät 13 überwacht, während der Elektromotor 2 von einem Elektromotorsteuergerät 14 gesteuert wird. Ein Getriebesteuergerät 15 überwacht die Anfahrkupplung 12 und das Getriebe 4, während die an den Rädern 7 angeordnete Bremse 16 von einem Bremsmanagementsteuergerät 17 angesteuert wird. Auch die Hochvoltbatterie 11 und das mit ihr verbundene Hochvoltenergiesystem des Hybridfahrzeuges werden durch ein Batteriemanagementsteuergerät 18 überwacht und gesteuert. Das Motorsteuergerät 13, das Elektromotorsteuergerät 14, das Getriebesteuergerät 15, das Bremsmanagementsteuergerät 17 und das Batteriemanagementsteuergerät 18 sind jeweils mit Sensoren S, welche die Ist-Zustände der Aggregate 1, 2, 3, 4, 7, 11, 12 erfassen, und Aktuatoren A zur Ansteuerung der Aggregate 1, 2, 3, 4, 7, 11, 12 verbunden und führen auf ein Fahrzeugsteuersystem 19, welches die Abläufe in den einzelnen Aggregaten wie Verbrennungsmotor 1, Elektromotor 2, Getriebe 4, Rad 7, Hochvoltbatterie 11 und Anfahrkupplung 12 koordiniert.

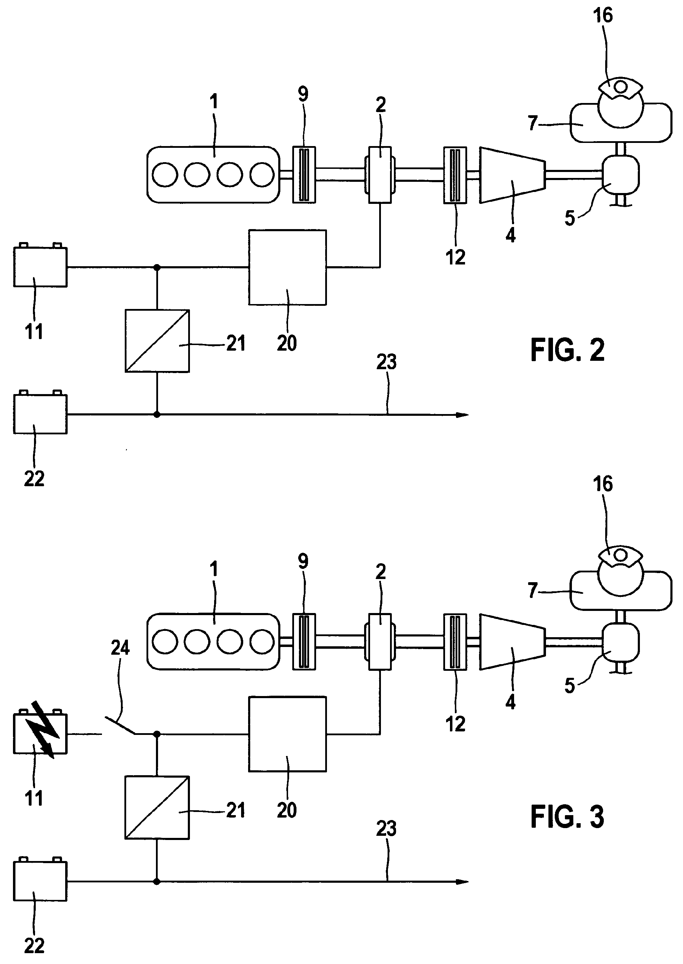

Zum Betrieb des Elektromotors 2 ist eine Hochspannung notwendig, welche von der Hochvoltbatterie 11 bereitgestellt wird. Die Hochvoltspannung beträgt annähernd 300 V und wird in eine Niedervoltspannung von 14 V umgewandelt, was im Zusammenhang mit Figur 2 erläutert werden soll.

Figur 2 zeigt die Einbindung des Hybridantriebes in das Energiesystem des Hybridfahrzeuges nach dem Stand der Technik. Der Elektromotor 2 ist über einen Pulswechselrichter 20 mit der Hochvoltbatterie 11 verbunden. Der Pulswechselrichter 20 wandelt die von der Hochvoltbatterie 11 bereitgestellte Gleichspannung von 300 V in eine Wechselspannung um, welche dem Elektromotor 2 zugeführt wird, um diesen motorisch anzutreiben. In diesem Betriebszustand liefert der Elektromotor 2 einen Beitrag zum Antrieb des Hybridfahrzeuges. Wird der Elektromotor 2 durch das Elektromotorsteuergerät 14 in den Generatorbetrieb umgeschaltet, was bei einem Bremsvorgang des Hybridfahrzeuges der Fall ist, liefert der Elektromotor 2 eine Wechselspannung, die von dem Pulswechselrichter 20 wieder in eine Gleichspannung gewandelt und der Hochvoltbatterie 11 zugeführt wird, um diese auszuladen.

Sowohl die Hochvoltbatterie 11 als auch der Pulswechselrichter 20 sind mit einem DC/DC-Wandler 21 verbunden, welcher die Gleichspannung von 300 V, die von der Hochvoltbatterie 11 geliefert wird, in eine Niedervoltgleichspannung von ungefähr 14 V umwandelt, um eine Niedervoltbatterie 22 aufzuladen, die in dem Niedervoltenergiesystem des Hybridfahrzeuges angeordnet ist und welche über ein Bordnetz 23 alle Steuergeräte des Hybridfahrzeuges mit der Niedervoltspannung versorgt. Neben nicht weiter dargestellten Steuergeräten, welche Komfortfunktionen des Fahrzeuges steuern, gehören dazu auch das Motorsteuergerät 13, das Elektromotorsteuergerät 14, das Getriebesteuergerät 15, das Bremsmanagementsteuergerät 17 und das Batteriemanagementsteuergerät 18, die in Figur 1 dargestellt sind.

Wird nun bei einer "Deckel offen Erkennung", welche aus Sicherheitsgründen, speziell zum Schutz vor Hochspannung zwingend erforderlich ist, erkannt, dass ein Fehler im Hochvoltenergiesystem vorliegt, wird, wie in Figur 3 dargestellt ist, ein Schalter 24, welcher zwischen der Hochvoltbatterie 11 und dem Pulswechselrichter 20 angeordnet ist, geöffnet und die Hochvoltbatterie 11 vom Energiesystem des Hybridfahrzeuges abgekoppelt. In diesem Fall wird keine Spannung mehr für das Niedervoltenergiesystem bereitgestellt. Um aber die Energieversorgung der für den Fahrbetrieb notwendigen Steuergeräte, wie das Motorsteuergerät 13, das Elektromotorsteuergerät 14, das Getriebesteuergerät 15, das Bremsmanagementsteuergerät 17 und das Batteriemanagementsteuergerät 18 mit einer Niedervoltspannung aufrecht zu erhalten, dient nun der Elektromotor 2 als Energiequelle. Der Elektromotor 2 arbeitet im generatorischen Betrieb und stellt eine Wechselspannung von 60 V bereit, die von dem Pulswechselrichter 20 in eine Gleichspannung von 60 V umgewandelt wird. Da der Schalter 24 geöffnet ist, liegt die Gleichspannung von 60 V an dem DC/DC-Wandler 21 an. Dieser DC/DC-Wandler 21 ist so ausgelegt, dass er neben einer Transformation der von der Hochvoltbatterie 11 bereitgestellten 300 V auch die von dem Elektromotor 2 und dem Pulswechselrichter 21 gelieferten 60 V in eine Niedervoltspannung von 14 V umwandeln kann. Diese Niederspannung von 14 V dient zum Aufladen der Niedervoltbatterie 22.

Die Spannung, welche von dem Elektromotor 2 bereitgestellt wird, ist auf 60 V begrenzt. Sie ist somit unkritisch und eine Gefährdung des Menschen, welcher sich am Energiesystem des Hybridfahrzeuges zu schaffen macht, wird ausgeschlossen.

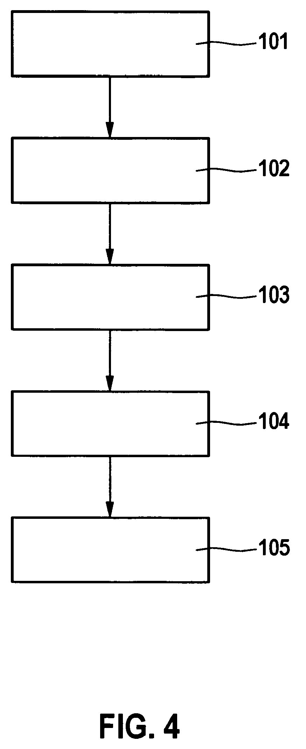

Der Ablauf zur Einstellung der Hilfsenergieversorgung für die Steuergeräte 13, 14, 15, 17, 18 des Hybridfahrzeuges soll mit Hilfe von Figur 4 näher erläutert werden. Im Block 101 überwacht das Batteriemanagementsteuergerät 18 das Hochvoltenergiesystem des Hybridfahrzeuges. Dabei wird nicht nur der Ladezustand der Hochvoltbatterie 11, sondern auch das Kommunikationssystem, welches als CAN-Bussystem ausgebildet ist, hinsichtlich einer Unterbrechung zum Hochvoltbatteriesystem überwacht. Darüber hinaus wird die Abdeckung des Hochvoltbatteriesystems geprüft, was als "Deckel offen Erkennung" (cover open) bekannt ist, um schon kleinste Umregelmäßigkeiten zu erkennen, die zu Störungen im Hochvoltenergiesystem führen können und die Sicherheit des Hybridfahrzeuges gefährden können.

Wird nun ein Defekt durch das Batteriemanagementsteuergerät 18 erkannt, schaltet dieses im Block 102 die Hochvoltbatterie ab und öffnet den Schalter 24 zwischen der Hochvoltbatterie 11 und dem Pulswechselrichter 20, wie es in Figur 3 dargestellt ist. Außerdem gibt das Batteriemanagementsteuergerät 18 bei fehlerfreier Kommunikationsleitung eine Information über die Störung im Hochvoltenergiesystem an das Fahrzeugmanagementsystem 19 weiter. Weist die Kommunikationsleitung einen Fehler auf, wird dieser vom Fahrzeugmanagementsystem 19 erkannt.

Im Block 103 wird auf Veranlassung des Batteriemanagementsystem der DC/DC-Wandler 21 von dem Betriebsmodus ,Transformation 300 V → 14 V' in den Betriebsmodus , Transformation 60 V → 14V' umgeschaltet.

Das Fahrzeugmanagementsystem 19 gibt im Block 104 einen Befehl an das Elektromotorsteuergerät 14 aus, den Elektromotor 2 aus dem drehmomentgeregelten Modus, in welchem sich der Elektromotor 2 befindet, wenn dieser zum Antrieb des Fahrzeuges beiträgt, in einen spannungsgeregelten Modus umzustellen. In diesem spannungsgeregelten Modus wird auf eine sicherheitsunkritische Zielspannung von 60 V geregelt, welche dann zur Umsetzung in die Niedervoltspannung von 14 V zur Verfügung steht. Im Block 105 kann auf Grund der Bereitstellung der 14 V Spannung auch bei einem ausgefallenen Hochenergiesystems des Hybridfahrzeuges dieses dauerhaft in einen Notlauf versetzt werden, in welchem es ohne eine Hochvoltspannung weiter fahren kann.

## Patentansprüche

1. Verfahren zum Betreiben eines Hybridfahrzeuges beim Defekt eines Energiesystems, wobei das Hybridfahrzeug von mindestens zwei Antriebsaggregaten (1, 2) gemeinsam oder getrennt angetrieben wird und mindestens ein elektrisches Antriebsaggregat (2) ein Hochvoltenergiesystem (11) elektrisch auflädt, welches ein Niedervoltenergiesystem (22, 23) mit elektrischer Energie versorgt, wobei eine Hochvoltspannung in eine Niedervoltspannung zur Versorgung von mindestens einer Steuereinheit (13, 14, 15, 17, 18) des Hybridfahrzeuges umgesetzt wird und bei Feststellung eines Defektes im Hochvoltenergiesystem (11) dieses von dem elektrischen Antriebsaggregat (2) abgetrennt wird, **dadurch gekennzeichnet, dass** nach dem Abtrennen des Hochvoltenergiesystems (11) das elektrische Antriebsaggregat (2) in einen Zustand zur Erzeugung einer für den Nutzer sicherheitsunkritischen Spannung versetzt wird, wobei die sicherheitsunkritische Spannung zur Versorgung der mindestens einen Steuereinheit (13, 14, 15, 17, 18) in die Niedervoltspannung umgesetzt wird.

2. Verfahren nach Anspruch 1 **dadurch gekennzeichnet, dass** zur Feststellung eines Defektes im Hochvoltenergiesystem (11) die hochspannungsführenden Komponenten, insbesondere die mechanische Abdeckung dieser überwacht werden.

3. Verfahren nach Anspruch 1 oder 2 **dadurch gekennzeichnet, dass** zur Feststellung eines Defektes im Hochvoltenergiesystem (11) die Kommunikationsverbindungen zum Hochvoltenergiesystem, insbesondere eine Busverbindung, überwacht werden.

4. Verfahren nach Anspruch 1 **dadurch gekennzeichnet, dass** die für den Nutzer sicherheitsunkritische Spannung annähernd 60 V beträgt.

5. Verfahren nach Anspruch 1 oder 4 **dadurch gekennzeichnet, dass** das elektrische Antriebsaggregat (2) als Elektromotor ausgebildet ist, der von einem drehmomentgeregelten Modus in einen spannungsgeregelten Modus umgeschaltet wird.

6. Verfahren nach Anspruch 1 **dadurch gekennzeichnet, dass** Steuereinheiten, welche für den Komfortbetrieb des Hybridfahrzeuges verantwortlich sind, nach der Feststellung des Defektes in dem Hochvoltenergiesystem (11) abgeschaltet werden.

7. Vorrichtung zum Betreiben eines Hybridfahrzeuges beim Defekt eines Energiesystems, wobei das Hybridfahrzeug von mindestens zwei Antriebsaggregaten (1,2) gemeinsam oder getrennt angetrieben wird und mindestens ein elektrisches Antriebsaggregat (2) das Hochvoltenergiesystem (11) elektrisch auflädt, welches ein Niedervoltenergiesystem (22, 23) mit elektrischer Energie versorgt, wobei eine Hochvoltspannung in eine Niedervoltspannung zur Versorgung von mindestens einer Steuereinheit (13, 14, 15, 17, 18) des Hybridfahrzeuges umgesetzt wird und bei Feststellung eines Defektes im Hochvoltenergiesystem (11) dieses von dem elektrischen Antriebsaggregat (2) abgetrennt wird, **dadurch gekennzeichnet, dass** Mittel (2, 20, 21, 24) vorhanden sind, welche das elektrische Antriebsaggregat (2) nach dem Abtrennen des Hochvoltenergiesystems (11) in einen Zustand zur Erzeugung einer für den Nutzer sicherheitsunkritischen Spannung versetzen, wobei die sicherheitsunkritische Spannung zur Versorgung der mindestens einen Steuereinheit (13, 14, 15, 17,18) in die Niedervoltspannung umgesetzt wird.

8. Vorrichtung nach Anspruch 7 **dadurch gekennzeichnet, dass** das elektrische Antriebsaggregat (2) über einen Pulswechselrichter (21) mit einer Schalteinrichtung (24) verbunden ist, welche das Hochvoltenergiesystem (11) mit dem elektrischen Antriebsaggregat (2) im intakten Betriebszustand des Hochvoltenergiesystems (11) verbindet und bei einem Defekt des Hochvoltenergiesystems (11) die Verbindung unterbricht.

9. Vorrichtung nach Anspruch 8 **dadurch gekennzeichnet, dass** ein Gleichspannungswandler (21) einerseits an die Schalteinrichtung (24) und den Pulswechselrichter (20) geführt und andererseits mit dem Niedervoltenergiesystem (22,23) verbunden ist.

10. Vorrichtung nach Anspruch 9 **dadurch gekennzeichnet, dass** der Gleichspannungswandler (22) zwischen einem ersten Betriebsmodus zur Umwandlung einer Hochvoltspannung in eine Niedervoltspannung und einem zweiten Betriebsmodus der Umwandlung der sicherheitsunkritischen Spannung in die Niedervoltspannung umschaltbar ist.

11. Vorrichtung nach Anspruch 8 **dadurch gekennzeichnet, dass** der Pulswechselrichter (20) so ausgebildet ist, dass er die an ihm anliegenden Spannungen in beide Richtungen wandeln kann.

12. Vorrichtung nach Anspruch 7 **dadurch gekennzeichnet, dass** das elektrische Antriebsaggregat (2) als Elektromotor ausgebildet ist, welcher von einer Elektromotorsteuereinheit (13) bei der Meldung eines Defektes durch eine Batteriemanagementsteuereinheit (18), welche das Hochvoltenergiesystem (11), insbesondere eine Hochvoltbatterie (11) überwacht, von einem drehmomentgeregelten Betriebsmodus in einen spannungsgeregelten Betriebsmodus zur Bereitstellung der sicherheitsunkritischen Spannung umgeschaltet wird.

13. Vorrichtung nach Anspruch 7 **dadurch gekennzeichnet, dass** das Niedervoltenergiesystem (22, 23) eine Niedervoltbatterie (22) umfasst, welche über den Gleichspannungswandler (21) mit Niedervoltspannung versorgt wird und welche die Steuereinheiten (13, 14, 15, 17, 18) über ein Bordnetz (23) mit Niedervoltspannung versorgt.

## Claims

1. Method for operating a hybrid vehicle in the case of a defect in an energy system, wherein the hybrid vehicle is driven jointly or separately by at least two drive assemblies (1, 2), and at least one electric drive assembly (2) electrically charges a high-voltage energy system (11) which supplies a low-voltage energy system (22, 23) with electrical energy, wherein a high voltage is converted into a low voltage for supplying at least one control unit (13, 14, 15, 17, 18) of the hybrid vehicle, and when a defect is detected in the high-voltage energy system (11), said system is disconnected from the electric drive assembly (2), **characterized in that** after the disconnection of the high-voltage energy system (11) the electric drive assembly (2) is placed in a state for generating a voltage which is not critical for the safety of the user, wherein the voltage which is not critical for safety is converted into the low voltage for supplying the at least one control unit (13, 14, 15, 17, 18).

2. Method according to Claim 1, **characterized in that** in order to detect a defect in the high-voltage energy system (11), the high-voltage-conducting components, in particular the mechanical cover thereof, are monitored.

3. Method according to Claim 1 or 2, **characterized in that** in order to detect a defect in the high-voltage energy system (11), the communication connections to the high-voltage energy system, in particular a bus connection, are monitored.

4. Method according to Claim 1, **characterized in that** the voltage which is not critical for the safety of the user is approximately 60 V.

5. Method according to Claim 1 or 4, **characterized in that** the electric drive assembly (2) is embodied as an electric motor which is switched from a torque-regulated mode into a voltage-regulated mode.

6. Method according to Claim 1, **characterized in that** control units which are responsible for the comfort operation of the hybrid vehicle are switched off after the detection of the defect in the high-voltage energy system (11).

7. Apparatus for operating a hybrid vehicle in the case of a defect in an energy system, wherein the hybrid vehicle is driven jointly or separately by at least two drive assemblies (1, 2), and at least one electric drive assembly (2) electrically charges the high-voltage energy system (11) which supplies a low-voltage energy system (22, 23) with electrical energy, wherein a high voltage is converted into a low voltage for supplying at least one control unit (13, 14, 15, 17, 18) of the hybrid vehicle, and when a defect is detected in the high-voltage energy system (11), said system is disconnected from the electric drive assembly (2), **characterized in that** means (2, 20, 21, 24) are provided which, after the disconnection of the high-voltage energy system (11), place the electric drive assembly (2) in a state for generating a voltage which is not critical for the safety of the user, wherein the voltage which is not critical for safety is converted into the low voltage for supplying the at least one control unit (13, 14, 15, 17, 18).

8. Apparatus according to Claim 7, **characterized in that** the electric drive assembly (2) is connected via a pulse inverter (21) to a switching device (24) which connects the high-voltage energy system (11) to the electric drive assembly (2) in the intact operating state of the high-voltage energy system (11), and disconnects the connection in the case of a defect in the high-voltage energy system (11).

9. Apparatus according to Claim 8, **characterized in that** a direct voltage transformer (21) is connected, on the one hand, to the switching device (24) and to the pulse inverter (20), and, on the other hand, to the low-voltage energy system (22, 23).

10. Apparatus according to Claim 9, **characterized in that** the direct voltage transformer (22) can be switched between a first operating mode for converting a high voltage into a low voltage, and a second operating mode for converting the voltage which is not critical for safety into the low voltage.

11. Apparatus according to Claim 8, **characterized in that** the pulse inverter (20) is embodied in such a way that it can convert the voltages applied to it in both directions.

12. Apparatus according to Claim 7, **characterized in that** the electric drive assembly (2) is embodied as an electric motor which, when a defect is signalled by a battery management control unit (18) which monitors the high-voltage energy system (11), in particular a high-voltage battery (11), is switched by an electric motor control unit (13) from a torque-regulated operating mode into a voltage-regulated operating mode in order to make available the voltage which is not critical for safety.

13. Apparatus according to Claim 7, **characterized in that** the low-voltage energy system (22, 23) comprises a low-voltage battery (22) which is supplied with low voltage via the direct voltage transformer (21) and which supplies the control units (13, 14, 15, 17, 18) with low voltage via an on-board power system (23).

## Revendications

1. Procédé pour faire fonctionner un véhicule hybride en cas de défaut d'un système d'énergie, le véhicule hybride étant propulsé par au moins deux groupes propulseurs (1, 2) ensemble ou séparément et au moins un groupe propulseur électrique (2) chargeant électriquement un système d'énergie à haute tension (11), lequel alimente en énergie électrique un système d'énergie à basse tension (22, 23), une haute tension étant convertie en une basse tension en vue de l'alimentation d'au moins une unité de commande (13, 14, 15, 17, 18) du véhicule hybride et, lorsqu'un défaut est constaté dans le système d'énergie à haute tension (11), celui-ci est déconnecté du groupe propulseur électrique (2), **caractérisé en ce qu'**après la déconnexion du système d'énergie à haute tension (11), le groupe propulseur électrique (2) est basculé dans un état de génération d'une tension non vitale pour la sécurité de l'utilisateur, la tension non vitale pour la sécurité étant convertie en la basse tension en vue de l'alimentation de l'au moins une unité de commande (13, 14, 15, 17, 18).

2. Procédé selon la revendication 1, **caractérisé en ce qu'**en vue de constater un défaut dans le système d'énergie à haute tension (11), les composants conduisant la haute tension, notamment le capotage mécanique de ceux-ci, sont surveillés.

3. Procédé selon la revendication 1 ou 2, **caractérisé en ce qu'**en vue de constater un défaut dans le système d'énergie à haute tension (11), les liaisons de communication vers le système d'énergie à haute tension, notamment une liaison par bus, sont surveillées.

4. Procédé selon la revendication 1, **caractérisé en ce que** la tension non vitale pour la sécurité de l'utilisateur est approximativement égale à 60 V.

5. Procédé selon la revendication 1 ou 4, **caractérisé en ce que** le groupe propulseur électrique (2) est réalisé sous la forme d'un moteur électrique qui est basculé d'un mode de régulation de couple en un mode de régulation de tension.

6. Procédé selon la revendication 1, **caractérisé en ce que** les unités de commande qui sont responsables du régime de confort du véhicule hybride sont mises hors circuit après avoir constaté le défaut dans le système d'énergie à haute tension (11).

7. Dispositif pour faire fonctionner un véhicule hybride en cas de défaut d'un système d'énergie, le véhicule hybride étant propulsé par au moins deux groupes propulseurs (1, 2) ensemble ou séparément et au moins un groupe propulseur électrique (2) chargeant électriquement le système d'énergie à haute tension (11), lequel alimente en énergie électrique un système d'énergie à basse tension (22, 23), une haute tension étant convertie en une basse tension en vue de l'alimentation d'au moins une unité de commande (13, 14, 15, 17, 18) du véhicule hybride et, lorsqu'un défaut est constaté dans le système d'énergie à haute tension (11), celui-ci est déconnecté du groupe propulseur électrique (2), **caractérisé en ce qu'**il existe des moyens (2, 20, 21, 24) qui, après la déconnexion du système d'énergie à haute tension (11), basculent le groupe propulseur électrique (2) dans un état de génération d'une tension non vitale pour la sécurité de l'utilisateur, la tension non vitale pour la sécurité étant convertie en la basse tension en vue de l'alimentation de l'au moins une unité de commande (13, 14, 15, 17, 18).

8. Dispositif selon la revendication 7, **caractérisé en ce que** le groupe propulseur électrique (2) est relié par le biais d'un onduleur à impulsions (21) à un appareil de commutation (24) qui relie le système d'énergie à haute tension (11) au groupe propulseur électrique (2) à l'état opérationnel intact du système d'énergie à haute tension (11) et interrompt la liaison en cas de défaut du système d'énergie à haute tension (11).

9. Dispositif selon la revendication 8, **caractérisé en ce qu'**un convertisseur de tension continue (21) est amené d'un côté à l'appareil de commutation (24) et à l'onduleur à impulsions (20) et, de l'autre côté, relié au système d'énergie à basse tension (22, 23).

10. Dispositif selon la revendication 9, **caractérisé en ce que** le convertisseur de tension continue (22) peut être permuté entre un premier mode de fonctionnement destiné à la conversion d'une haute tension en une basse tension et un deuxième mode de fonctionnement de conversion de la tension non vitale pour la sécurité en la basse tension.

11. Dispositif selon la revendication 8, **caractérisé en ce que** l'onduleur à impulsions (20) est configuré de telle sorte qu'il peut convertir les tensions qui lui sont appliquées dans les deux sens.

12. Dispositif selon la revendication 7, **caractérisé en ce que** le groupe propulseur électrique (2) est réalisé sous la forme d'un moteur électrique qui est basculé d'un mode de régulation de couple en un mode de régulation de tension en vue de délivrer la tension non vitale pour la sécurité par une unité de commande de moteur électrique (13) en cas de signalisation d'un défaut par une unité de commande et de gestion de batterie (18) qui surveille le système d'énergie à haute tension (11), notamment une batterie à haute tension (11).

13. Dispositif selon la revendication 7, **caractérisé en ce que** le système d'énergie à basse tension (22, 23) comprend une batterie basse tension (22) qui est alimentée en basse tension par le biais du convertisseur de tension continue (21) et qui alimente les unités de commande (13, 14, 15, 17, 18) en basse tension par le biais d'un réseau de bord (23).
